# EUROPEAN PATENT APPLICATION

(11) **EP 4 794 286 A1**
(43) Date of publication of application: **19.08.2026**
(21) Application number: 24891633.0
(22) Date of filing: 23.09.2024
(51) Int. Cl.: H04L 41/12, H04L 41/0695

(54) **MANAGEMENT SERVER AND CONTROL METHOD THEREOF**

(30) Priority: 13.11.2023 KR 20230156312
(71) Applicant: Samsung Electronics Co., Ltd., Suwon-si, Gyeonggi-do 16677 (KR)
(72) Inventor: JUNG, Jaehoon, Suwon-si, Gyeonggi-do 16677 (KR); KIM, Seonhee, Suwon-si, Gyeonggi-do 16677 (KR); KIM, Jeonghun, Suwon-si, Gyeonggi-do 16677 (KR)
(74) Representative: Appleyard Lees IP LLP
(86) International application number: PCT/KR2024/014302
(87) International publication number: WO 2025/105686

(57) **Abstract**

The present disclosure relates to a management server and a control method thereof. Specifically, a management server and a control method thereof may be provided, the management server comprising a monitoring module and a scheduling module, wherein: the monitoring module receives resource information from at least one cluster; and the scheduling module receives an update request for the at least one cluster, determines an update time point of the at least one cluster on the basis of status information and network performance information included in the resource information and the service coverage of neighboring clusters, and transmits an update specification so as to update network functions of the at least one cluster at the determined update time point.

## Description

### TECHNICAL FIELD

### Field

The present disclosure relates to a management server and a control method thereof. Specifically, the present disclosure provides a management server for updating a Cloud-Native Network Function (CNF) of a cluster and a control method thereof.

### Background Art

A management server may update a network function of at least one cluster. The network function may be a Cloud-Native Network Function (CNF). The cloud-native network function may be a unit of a service provided by a cloud architecture.

The management server may update the network function regardless of the status of the at least one cluster. When the management server updates the network function regardless of the status of the at least one cluster, network loss may occur depending on the status of the at least one cluster.

### DISCLOSURE OF INVENTION

### Solution to Problem

A management server according to an embodiment of the present disclosure may include a monitoring module and a scheduling module. The monitoring module according to an embodiment may receive resource information from at least one cluster. The scheduling module according to an embodiment may receive an update request for the at least one cluster. The scheduling module according to an embodiment may determine an update time point of at least one cluster, based on status information and network performance information included in the resource information and on a service coverage of a neighboring cluster. The scheduling module according to an embodiment may transmit an update specification so as to update network functions of the at least one cluster at the determined update time point.

A control method of a management server according to an embodiment of the present disclosure may include receiving resource information from the at least one cluster. The control method of a management server according to an embodiment of the present disclosure may include receiving an update request for the at least one cluster. The control method of a management server according to an embodiment of the present disclosure may include determining an update time point of the at least one cluster, based on status information and network performance information included in the resource information and on a service coverage of a neighboring cluster. The control method of a management server according to an embodiment of the present disclosure may include transmitting an update specification so as to update network functions of the at least one cluster at the determined update time point.

### BRIEF DESCRIPTION OF DRAWINGS

FIG. 1 is a diagram illustrating a system including a management server and at least one cluster, according to an embodiment of the present disclosure.
FIG. 2 is a block diagram illustrating a management server according to an embodiment of the present disclosure.
FIG. 3 is a block diagram illustrating a first cluster according to an embodiment of the present disclosure.
FIG. 4 is a block diagram illustrating a cloud architecture according to an embodiment of the present disclosure.
FIG. 5 is a flowchart illustrating a control method of a management server, according to an embodiment of the present disclosure.
FIG. 6 is a flowchart illustrating a control method of a management server, for each operating subject, according to an embodiment of the present disclosure.
FIG. 7 is a diagram illustrating control of an update time point of at least one cluster according to a control method of a management server, according to an embodiment of the present disclosure.
FIG. 8 is a diagram illustrating a management server controlling an update time point of at least one cluster according to hardware resource information, according to an embodiment of the present disclosure.
FIG. 9 is a diagram illustrating a management server controlling an update time point of at least one cluster according to software resource information, according to an embodiment of the present disclosure.
FIG. 10 is a diagram illustrating a management server controlling an update time point of at least one cluster according to region information, according to an embodiment of the present disclosure.
FIG. 11 is a diagram illustrating a management server controlling an update time point of at least one cluster according to a service coverage, according to an embodiment of the present disclosure.
FIG. 12 is a diagram illustrating a management server controlling an update time point of at least one cluster according to a Network Element (NE) type, according to an embodiment of the present disclosure.

### MODE FOR THE INVENTION

Terms used in the present disclosure will be briefly described, and an embodiment of the present disclosure will be described in detail.

The terms used in the present disclosure have been selected as currently widely used general terms as possible while considering functions in an embodiment of the present disclosure, but may vary depending on the intention of those skilled in the art, precedents, the emergence of new technologies, and the like. In addition, in certain cases, there are terms arbitrarily selected by the applicant, and in this case, the meaning will be described in detail in the description of the corresponding embodiment of the present disclosure. Therefore, the terms used in the present disclosure should be defined based on the meaning of the terms and the details throughout the present disclosure, rather than simple names of the terms.

In the present disclosure, the expression "at least one of a, b, or c" may refer to "a", "b", "c", "a and b", "a and c", "b and c", "all of a, b, and c", or variations thereof.

Throughout the present disclosure, when a part is described as "including" a certain component, this indicates that other components may be further included, rather than excluding other components, unless otherwise stated. In addition, terms such as "unit" and "module" described in the present disclosure refer to a unit that processes at least one function or operation, and may be implemented in hardware or software or a combination of hardware and software.

Hereinafter, embodiments of the disclosure will be described in detail with reference to the accompanying drawings so that those skilled in the art may easily carry out the disclosure. However, an embodiment of the present disclosure may be implemented in various different forms and is not limited to the embodiments described herein. In addition, in the drawings, parts irrelevant to the description are omitted to clearly describe an embodiment of the present disclosure, and similar reference numerals are assigned to similar parts throughout the disclosure.

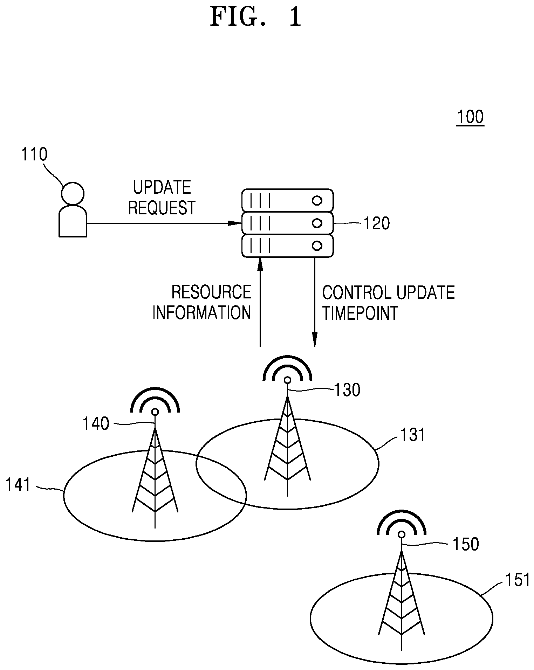

FIG. 1 is a diagram illustrating a system 100 including a management server 120 and at least one cluster 130, 140, or 150 according to an embodiment of the present disclosure.

A cluster may be a set of resources performing operation processing. The cluster may be in the form of a server, a base station, or a data center. For example, a data center may be an aggregate of a plurality of clusters including a large amount of resources.

The management server 120 may be a server that manages the at least one cluster 130, 140, or 150. The management server 120 may be referred to as a management cluster.

The at least one cluster 130, 140, or 150 may provide a call service to a User Equipment (UE) belonging to a designated region. The at least one cluster 130, 140, or 150 may include a plurality of clusters. For example, the at least one cluster 130, 140, or 150 may include a first cluster 130, a second cluster 140, and a third cluster 150. The at least one cluster 130, 140, or 150 may have a designated service coverage. For example, the first cluster 130 may have a first service coverage 131. For example, the second cluster 140 may have a second service coverage 141. For example, the third cluster 150 may have a third service coverage 151. The service coverage may be referred to as coverage of a cluster.

When the at least one cluster 130, 140, or 150 is located within a specified distance from the management server 120, the at least one cluster 130, 140, or 150 may be referred to as an edge cluster. When the at least one cluster 130, 140, or 150 is located farther than a specified distance from the management server 120, the at least one cluster 130, 140, or 150 may be referred to as a far edge cluster.

The management server 120 may receive resource information from the at least one cluster 130, 140, or 150. The management server 120 may periodically monitor resource information from the at least one cluster 130, 140, or 150. The resource information may include status information and network performance information.

The status information may include hardware information of the at least one cluster 130, 140, or 150, software information of the at least one cluster 130, 140, or 150, and base station status information of the at least one cluster 130, 140, or 150. The hardware information may include a hardware resource capacity of the at least one cluster 130, 140, or 150 and a hardware resource usage of the at least one cluster 130, 140, or 150. The software information may include the amount of software resources used by the at least one cluster 130, 140, or 150, the number of user equipments connected to the at least one cluster 130, 140, or 150, and the number of active calls of the at least one cluster 130, 140, or 150. The base station status information of the at least one cluster 130, 140, or 150 may include region information of the at least one cluster 130, 140, or 150, service coverage information of the at least one cluster 130, 140, or 150, and Network Element (NE) type information of the at least one cluster.

The network performance information may include a Key Performance Indicator (KPI) of a network to which the at least one cluster 130, 140, or 150 is connected.

The management server 120 may receive an update request from a user 110. The management server 120 may analyze the resource information from the at least one cluster 130, 140, or 150 in response to the update request.

The management server 120 may determine an update time point based on the status information and the network performance information included in the resource information and of the service coverage of a neighboring cluster. The management server 120 may determine an update time point based on the hardware information of the at least one cluster 130, 140, or 150, the software information of the at least one cluster 130, 140, or 150, the base station status information of the at least one cluster 130, 140, or 150, a Key Performance Indicator (KPI) of a network to which the at least one cluster 130, 140, or 150 is connected, and a service coverage of a neighboring cluster.

The management server 120 may control the update time point of the at least one cluster 130, 140, or 150. The management server 120 may transmit an update specification to the at least one cluster 130, 140, or 150 so as to update network functions of the at least one cluster 130, 140, or 150 at the determined update time point.

The management server 120 may analyze a status of the at least one cluster 130, 140, or 150 and a status of a network to which the at least one cluster 130, 140, or 150 is connected, based on the resource information. The management server 120 may determine the update time point based on an analysis result. Accordingly, the management server 120 may reduce network loss that occurs when the network function is updated.

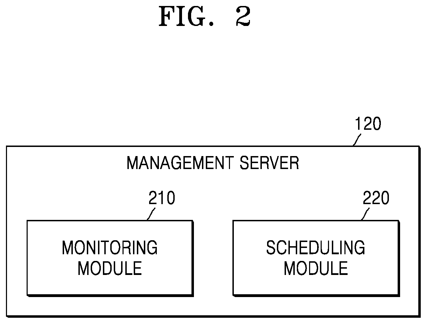

FIG. 2 is a block diagram illustrating the management server 120 according to an embodiment of the present disclosure. The management server 120 according to an embodiment may include a monitoring module 210 and a scheduling module 220.

The monitoring module 210 may monitor states of a plurality of micro-services. The micro-service may include network functions of the at least one cluster 130, 140, or 150. For example, the micro-service may be a unit service that provides a Cloud-Native Network Function (CNF). The micro-service may perform call processing in a cloud environment. For example, the monitoring module 210 may monitor the number of calls being processed by each of the plurality of micro-services, the number of emergency calls being processed by each of the plurality of micro-services, and a throughput of each of the plurality of micro-services. The monitoring module 210 may periodically monitor the states of the plurality of micro-services. The monitoring module 210 may transmit the monitored states of the plurality of micro-services to the scheduling module 220.

The scheduling module 220 may receive a result of monitoring the states of the plurality of micro-services from the monitoring module 210. The scheduling module 220 may determine update time points of the plurality of micro-services of the at least one cluster 130, 140, or 150. The scheduling module 220 may determine an update order and an update option of the plurality of micro-services based on an update request from the user 110. For example, the monitoring module 210 may determine an update order to update from a micro service having a small number of calls being processed among the plurality of micro services.

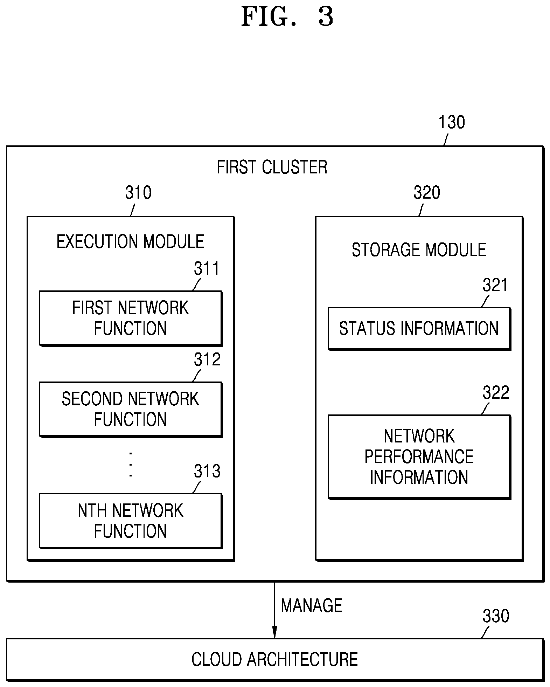

FIG. 3 is a block diagram illustrating the first cluster 130 according to an embodiment of the present disclosure. The first cluster 130 according to an embodiment may include an execution module 310 and a storage module 320. The description of the first cluster 130 with reference to FIG. 3 may be equally applied to the second cluster 140 or the third cluster 150.

The execution module 310 may execute a plurality of network functions 311, 312, and 313. The plurality of network functions 311, 312, and 313 may include functions for performing call processing. For example, the plurality of network functions 311, 312, and 313 may include a first network function 311, a second network function 312, and an Nth network function 313 (N is a natural number of 3 or more). The execution module 310 may update the plurality of network functions 311, 312, and 313. The execution module 310 may receive the update specification from the management server 120. The execution module 310 may update the plurality of network functions 311, 312, and 313 according to a requirement of the update specification.

The storage module 320 may store status information 321 and network performance information 322. The storage module 320 may transmit the status information 321 and the network performance information 322 to the management server 120.

The first cluster 130 may manage a cloud architecture 330. The plurality of network functions 311, 312, and 313 of the first cluster 130 may be cloud-native network functions that manage the cloud architecture 330.

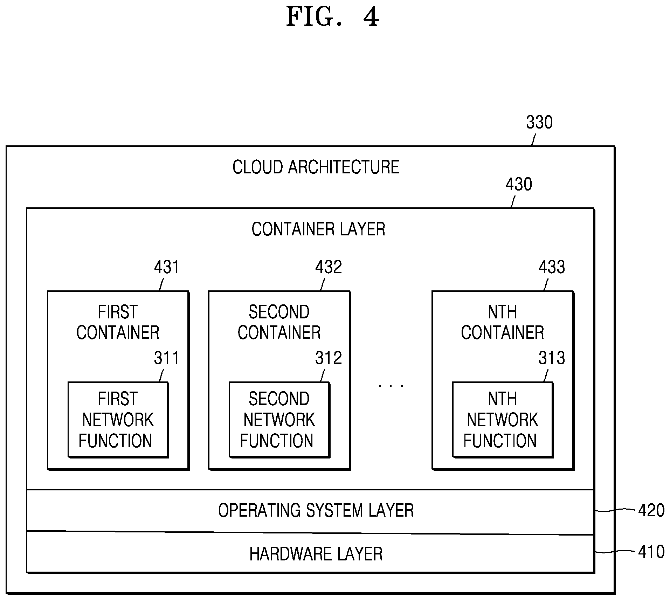

FIG. 4 is a block diagram illustrating the cloud architecture 330 according to an embodiment of the present disclosure. The cloud architecture 330 may be a structure in which a network function is virtualized using a cloud environment. The cloud architecture 330 may generate a network function by using a plurality of containers 431, 432, and 433. The cloud architecture 330 according to an embodiment may include a hardware layer 410, an Operating System (OS) layer 420, and a container layer 430.

The hardware layer 410 may include physical network equipment of the cloud architecture 330. The hardware layer 410 may include commodity hardware.

The operating system layer 420 may drive an operating system of the cloud architecture 330. The operating system layer 420 may execute a network function by driving an operating system.

The container layer 430 may include a plurality of containers 431, 432, and 433. For example, the container layer 430 may include a first container 431, a second container 432, and an Nth container 433 (N is a natural number of 3 or more).

The plurality of containers 431, 432, and 433 may include the plurality of network functions 311, 312, and 313, respectively. For example, the first container 431 may include the first network function 311. For example, the second container 432 may include the second network function 312. For example, the Nth container 433 may include the Nth network function 313. The cloud architecture 330 may include the plurality of containers 431, 432, and 433 such that each of the plurality of network functions 311, 312, and 313 provides a micro-service.

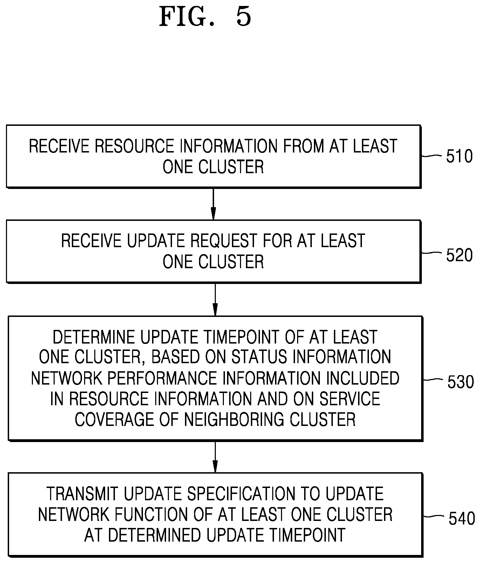

FIG. 5 is a flowchart illustrating a control method of the management server 120, according to an embodiment of the present disclosure.

In operation 510, the management server 120 according to an embodiment may receive resource information from the at least one cluster 130, 140, or 150. The at least one cluster 130, 140, or 150 may be configured with a Cloud-Native Network Function (CNF). The management server 120 may receive hardware information from the at least one cluster 130, 140, or 150. The hardware information may include CPU information, memory information, and capacity information. The management server 120 may receive software information from the at least one cluster 130, 140, or 150. The software information may include throughput information, latency information, information about the number of user equipments, and information about the number of processed calls.

In operation 520, the management server 120 according to an embodiment may receive an update request for the at least one cluster 130, 140, or 150. The management server 120 may receive an update request for the at least one cluster 130, 140, or 150 from the user 110. The management server 120 may receive an update rule related to the update request. The update rule may include at least one of an update completion deadline of the at least one cluster 130, 140, or 150, a hardware parameter of the at least one cluster 130, 140, or 150, a software parameter of the at least one cluster 130, 140, or 150, and an update region of the at least one cluster 130, 140, or 150.

In operation 530, the management server 120 according to an embodiment may determine an update time point of the at least one cluster 130, 140, or 150 based on the status information and the network performance information included in the resource information, and the service coverage of a neighboring cluster. The management server 120 may determine an update time point based on the hardware information of the at least one cluster 130, 140, or 150, the software information of the at least one cluster 130, 140, or 150, the base station status information of the at least one cluster 130, 140, or 150, a Key Performance Indicator (KPI) of a network to which the at least one cluster 130, 140, or 150 is connected, and a service coverage of a neighboring cluster.

The management server 120 may include a storage module. The storage module may store status information and a service coverage.

The management server 120 may identify a first service coverage of the at least one cluster 130, 140, or 150 and a second service coverage of a neighboring cluster. When the first service coverage and the second service coverage at least partially overlap each other, the management server 120 may set a first update period of the at least one cluster 130, 140, or 150 and a second update period of the neighboring cluster such that the update periods do not overlap each other. For example, when the first service coverage and the second service coverage at least partially overlap each other, the management server 120 may update the at least one cluster 130, 140, or 150, and update a neighboring cluster after the update of the at least one cluster 130, 140, or 150 is completed.

The management server 120 may determine an update time point based on a Network Element (NE) type of the at least one cluster 130, 140, or 150. The network element type may include whether a network function performed by the at least one cluster 130, 140, or 150 is a Central Unit (CU) or a Distributed Unit (DU). The network element type may include whether the central unit and the distributed unit operate in one cluster. The network element type may include whether the at least one cluster 130, 140, or 150 is a Stand Alone (SA) type or a Non-Stand Alone (NSA) type. The network element type may include whether the frequency band used by the at least one cluster 130, 140, or 150 is sub-6 or mmWave. When the network element type at least partially overlaps with that of the neighboring cluster, the management server 120 may set the first update period of the at least one cluster 130, 140, or 150 and the second update period of the neighboring cluster such that the update periods do not overlap.

The management server 120 may determine an update time point based on at least one of whether a neighboring cluster is updated and a version of the neighboring cluster. The management server 120 may identify a status of the neighboring cluster. The management server 120 may identify the version of the neighboring cluster based on the identified status of the neighboring cluster. The management server 120 may determine an update time point of the at least one cluster 130, 140, or 150 based on the identified version of the neighboring cluster.

The management server 120 may identify the number of User Equipments (UE) connected to the at least one cluster 130, 140, or 150, whether the number of active calls of the at least one cluster 130, 140, or 150 is less than or equal to a threshold value, and the number of currently active emergency calls. The management server 120 may identify an internal resource of a current cluster. The management server 120 may identify the number of user equipments and the number of active calls based on a result of identifying the internal resource. The management server 120 may determine an update time point based on a result of identifying the number of user equipments and the number of active calls.

When a rule other than the base station status is satisfied, the management server 120 may determine an update progress time point based on the service coverage with respect to the neighboring cluster and the network element type. When an update is not in progress in a neighboring cluster of the same network element type among neighboring clusters having a service coverage overlapping the coverage of the cluster, the management server 120 may update of the corresponding cluster.

In operation 540, the management server 120 according to an embodiment may transmit an update specification to update the network function of the at least one cluster 130, 140, or 150 at the determined update time point.

The at least one cluster 130, 140, or 150 may receive the update specification. The at least one cluster 130, 140, or 150 may update the network function based on the received update specification. The at least one cluster 130, 140, or 150 may transmit an update status in response to the update specification. The management server 120 may receive the update status transmitted from the at least one cluster 130, 140, or 150. The management server 120 may provide an update result based on the update status.

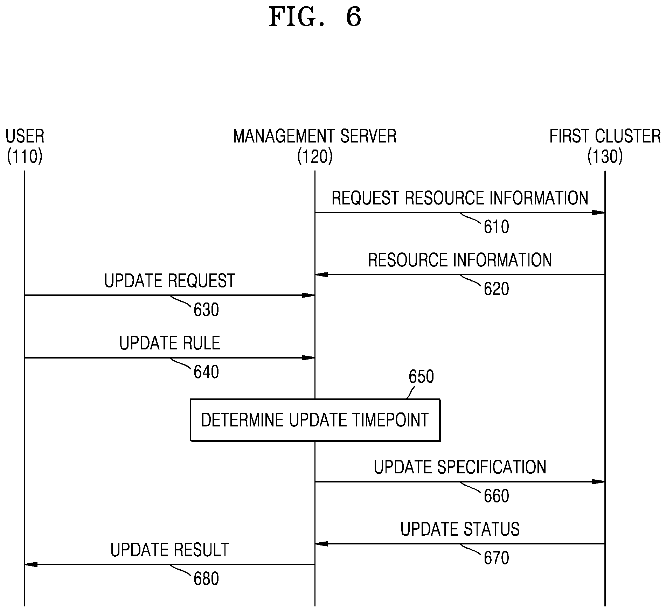

FIG. 6 is a flowchart illustrating a control method of the management server 120, for each operating subject, according to an embodiment of the present disclosure.

In operation 610, the management server 120, according to an embodiment, may request resource information from the first cluster 130.

In operation 620, the first cluster 130 according to an embodiment may provide resource information to the management server 120.

In operation 630, the management server 120 according to an embodiment may receive an update request from the user 110.

In operation 640, the management server 120 according to an embodiment may receive an update rule from the user 110. For example, the management server 120 may receive an update rule including an update completion deadline, a maximum CPU usage at the time of update, a maximum memory usage at the time of update, a maximum call drop rate at the time of update, an update region, and a network element type.

In operation 650, the management server 120 according to an embodiment may determine an update time point. The management server 120 may determine the update time point by using resource resources of the first cluster 130, which the management server 120 is monitoring, and a key performance indicator of a network.

In operation 660, the management server 120 according to an embodiment may transmit an update specification to the first cluster 130. The update specification may include details related to the update progress of a cloud-native network function included in the first cluster 130.

In operation 670, the first cluster 130 according to an embodiment may transmit the update status to the management server 120. The first cluster 130 may update the cloud-native network function according to the update specification. The first cluster 130 may transmit an update status including information related to an update progress status to the management server 120.

In operation 680, the management server 120 according to an embodiment may provide an update result. The management server 120 may provide the update result of the first cluster 130 to a user.

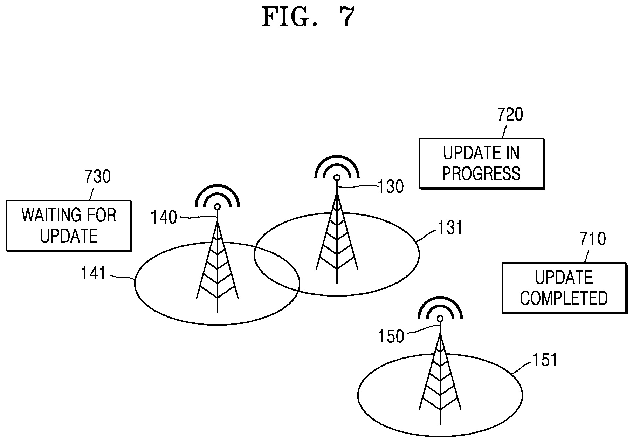

FIG. 7 is a diagram illustrating control of an update time point of the at least one cluster 130, 140, or 150 according to a control method of the management server 120, according to an embodiment of the present disclosure.

The management server 120 may update the at least one cluster 130, 140, or 150. The management server 120 may update the first cluster 130, the second cluster 140, and the Nth (N is a natural number of 3 or more) cluster 150. The management server 120 may update the first cluster 130, the second cluster 140, and the Nth cluster 150 to reduce overall network loss.

The management server 120 may control the update time point of the Nth cluster 150 such that the update of the Nth cluster 150 which has a service coverage that does not overlap that of a neighboring cluster among the at least one cluster 130, 140, or 150 is performed first. The management server 120 may receive update completion status information 710 from the Nth cluster 150.

The management server 120 may perform updating of the first cluster 130 and the second cluster 140 which have service coverages that at least partially overlap each other among the at least one cluster 130, 140, or 150 such that the updates do not overlap each other. The management server 120 may receive update-in-progress status information 720 from the first cluster 130. The management server 120 may control the update of the second cluster 140 in a standby status. The management server 120 may control the update time point of the second cluster 140 to a time point after the update of the first cluster 130 is completed. The management server 120 may receive update-standby status information 730 from the second cluster 140.

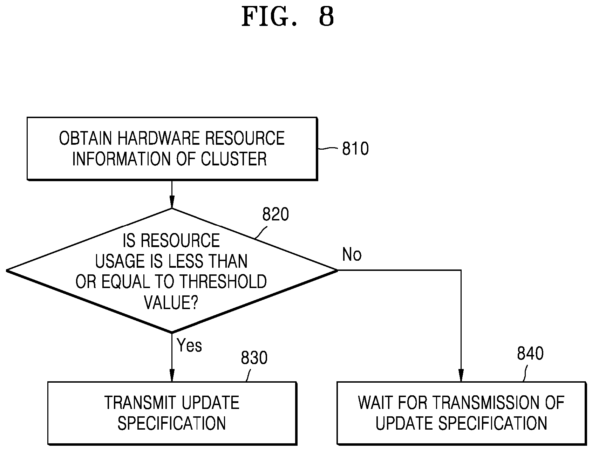

FIG. 8 is a diagram illustrating the management server 120 controlling an update time point of the at least one cluster 130, 140, or 150 according to hardware resource information, according to an embodiment of the present disclosure.

In operation 810, the management server 120 according to an embodiment may obtain hardware resource information of the cluster. The hardware resource information may include a CPU parameter of the cluster, a memory parameter of the cluster, and a capacity parameter of the cluster.

In an embodiment, the management server 120 may obtain hardware resource usage and hardware resource capacity information in a base station including the cluster, in relation to the hardware resource information of a cluster. For example, the management server 120 may obtain CPU usage of the base station including the cluster, memory usage of the base station, and capacity information of the base station. The management server 120 may qualitatively or quantitatively classify the hardware resource information. For example, the management server 120 may classify the hardware resource information into tiny (small), medium, and large. For example, the management server 120 may obtain and store the hardware resource information as a quantitative value for each parameter.

In operation 820, the management server 120 according to an embodiment may identify whether the resource usage is less than or equal to a threshold value. The threshold value of the resource usage may be a value determined for each parameter type of the hardware resource. For example, the threshold value of the CPU usage may be 5 cores. For example, the threshold value of the memory usage may be 10 gigabytes.

The management server 120 may determine whether the resource usage is less than or equal to a threshold value by additionally considering other numerical values of the hardware resource information, such as the resource usage separately from the resource usage or the resource usage. For example, when the CPU usage among the resource usage is 5 cores and the total memory capacity of the CPU is 20 gigabytes, the management server 120 may determine that the resource usage is at a threshold value.

When the resource usage is less than or equal to the threshold value (operation 820 - Yes), the management server 120 according to an embodiment may proceed to operation 830. When the resource usage is greater than the threshold value (operation 820 - No), the management server 120 according to an embodiment may proceed to operation 840.

In operation 830, the management server 120 according to an embodiment may transmit the update specification. When the resource usage is less than or equal to the threshold value, the management server 120 may determine this as a time point when the cluster may be updated. The management server 120 may transmit an update specification including a command to update the cluster when the resource usage is less than or equal to the threshold value.

In operation 840, the management server 120 according to an embodiment may wait for transmission of the update specification. When the resource usage is greater than the threshold value, the management server 120 may determine this as a time point to defer updating the cluster. When the resource usage amount is greater than the threshold value, the management server 120 may wait for transmission of the update specification until the resource usage amount becomes less than or equal to the threshold value.

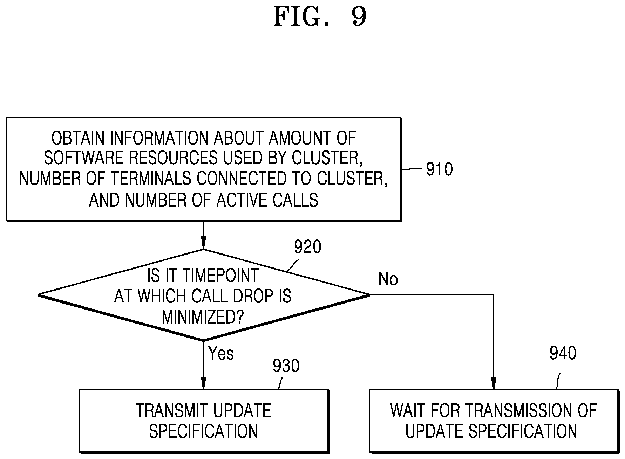

FIG. 9 is a diagram illustrating a management server controlling an update time point of at least one cluster according to software resource information, according to an embodiment of the present disclosure.

In operation 910, the management server 120 according to an embodiment may obtain information about the amount of software resources used by a cluster, the number of terminals connected to the cluster, and the number of active calls. The software resource information may include software resource usage, the number of terminals connected to a cluster, and the number of active calls. The software resource information may include a throughput parameter of the cluster, a latency parameter of the cluster, a number parameter of user equipments of the cluster, and a call number parameter. The management server 120 may obtain software resource information of the cluster. The management server 120 may obtain information on the software resource usage of the cluster, the number of terminals connected to the cluster, and the number of active calls based on the software resource information.

In an embodiment, the management server 120 may monitor the usage of software resources in a base station including the cluster, in relation to the software resource information of the cluster. For example, the management server 120 may monitor the number of user equipments connected to the base station and the number of active calls connected to the base station. The management server 120 may obtain and store the software resource information as a quantitative value.

In operation 920, the management server 120 according to an embodiment may identify whether it is a time point at which call drop is minimized. The time point at which the call drop is minimized may be determined based on the software resource information. For example, the management server 120 may predict a call drop value based on the software resource usage of the cluster, the number of terminals connected to the cluster, and the number of active calls included in the software resource information. The management server 120 may identify a time point at which a call drop is expected to be minimized. The management server 120 may identify whether a time point at which the call drop is expected to be minimized is the current time.

The management server 120 may identify a time point at which the call drop is expected to be minimized, by additionally considering other conditions separately from the software resource information or together with the software resource information. The management server 120 may receive an update rule related to at least some of the update completion deadline, the monitored hardware parameter, and the monitored base station status. The management server 120 may receive an update rule related to ae call drop condition. For example, the management server 120 may receive an update rule that a call drop rate should be less than or equal to 1 %. The management server 120 may identify a time point at which the update rule related to the call drop condition is satisfied.

When it is a time point at which the call drop is minimized (operation 920 - Yes), the management server 120 according to an embodiment may proceed to operation 930. When it is not the time point at which the call drop is minimized (operation 920 - No), the management server 120 according to an embodiment may proceed to operation 940.

In operation 930, the management server 120 according to an embodiment may transmit an update specification. At a time point when the call drop is minimized, the management server 120 may determine that this is a time point when the cluster may be updated. The management server 120 may transmit an update specification including a command to update the cluster when the resource usage is at a time point at which the call drop is minimized. When a plurality of clusters satisfy an update condition in a multi-cluster environment, the management server 120 may preferentially update a cluster in which a lower call drop is expected among the plurality of clusters.

In operation 940, the management server 120 according to an embodiment may wait for transmission of the update specification. The management server 120 may determine this as a time point to defer updating of the cluster when it is not a time point at which the call drop is minimized. At the time point that is not a time point at which the call drop is minimized, the management server 120 may wait for transmission of the update specification until the resource usage becomes less than or equal to the threshold value.

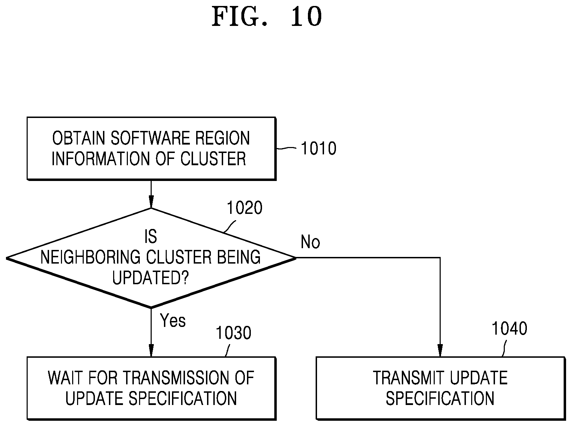

FIG. 10 is a diagram illustrating a management server controlling an update time point of at least one cluster according to region information, according to an embodiment of the present disclosure.

In operation 1010, the management server 120 according to an embodiment may obtain region information of the cluster. The region information may include information related to the actual location of the cluster. The management server 120 may obtain the region information of the cluster in order to identify the status of a neighboring cluster. The management server 120 may designate a region to be updated.

In an embodiment, in relation to the region information of the cluster, the management server 120 may monitor whether the cluster is updated and a version and a status of the cluster. For example, the management server 120 may monitor whether the neighboring cluster is updated and a version and a status of the neighboring cluster in order to identify the status of the neighboring cluster.

In operation 1020, the management server 120 according to an embodiment may identify whether the neighboring cluster is being updated. Whether the neighboring cluster is being updated may be determined based on the region information of the cluster. For example, the management server 120 may identify whether the neighboring cluster is being updated, by identifying the status of the neighboring cluster in real time.

The management server 120 may identify whether the neighboring cluster is being updated, by additionally considering other conditions separately from the region information of the cluster or together with the region information of the cluster.

When the neighboring cluster is being updated (operation 1020 -Yes), the management server 120 according to an embodiment may proceed to operation 1030. When the neighboring cluster is not being updated (operation 1020 - No), the management server 120 according to an embodiment may proceed to operation 1040.

In operation 1030, the management server 120 according to an embodiment may wait for transmission of the update specification. When the neighboring cluster is being updated, the management server 120 may determine this as a time point to defer updating the cluster. When the neighboring cluster is being updated, the management server 120 may wait for transmission of the update specification until the update of the neighboring cluster is terminated.

In operation 1040, the management server 120 according to an embodiment may transmit the update specification. When the neighboring cluster is not being updated, the management server 120 may determine this as a time point when the cluster may be updated. When the neighboring cluster is not being updated, the management server 120 may transmit an update specification including a command to update the cluster. The management server 120 may identify the status of the neighboring cluster in real time and control the update time point of the corresponding cluster.

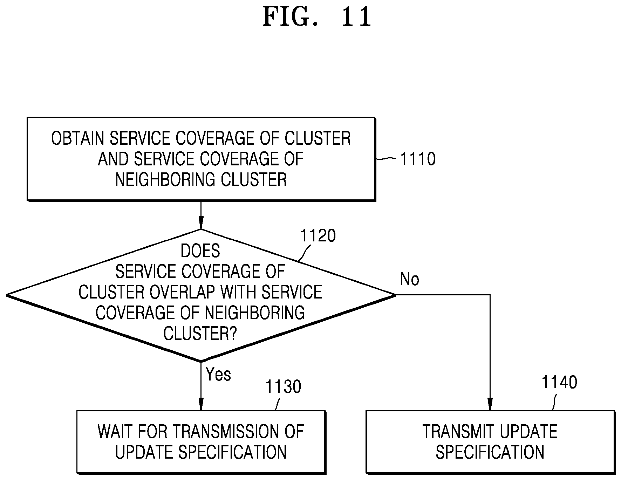

FIG. 11 is a diagram illustrating a management server controlling an update time point of at least one cluster according to a service coverage, according to an embodiment of the present disclosure.

In operation 1110, the management server 120 according to an embodiment may obtain a service coverage of a cluster and a service coverage of a neighboring cluster. A service coverage may include a management coverage of a cluster. The service coverage may be referred to as coverage of a cluster.

In an embodiment, the management server 120 may obtain frequency bandwidth information of the cluster in order to obtain a service coverage of the cluster and a service coverage of the neighboring cluster. For example, the management server 120 may identify whether the frequency bandwidth of the cluster is a millimeter wave (mmWave) band, a sub-6GHz band, or a C-band band. The service coverage of the cluster may be determined according to the frequency bandwidth of the cluster. For example, the management server 120 may identify a service coverage of the cluster for each frequency band.

In operation 1120, the management server 120 according to an embodiment may identify whether the service coverage of the cluster overlaps with the service coverage of the neighboring cluster. The management server 120 may identify whether the obtained service coverage of the cluster and the service coverage of the neighboring cluster overlap each other. For example, the management server 120 may identify whether the management coverage of the cluster and the management coverage of the neighboring cluster at least partially overlap. For example, the management server 120 may identify whether the frequency range of the cluster and the frequency range of the neighboring cluster at least partially overlap.

The management server 120 may identify whether the service coverage of the cluster and the service coverage of the neighboring cluster overlap each other, by additionally considering the service coverage of the cluster and the region information of the cluster together.

When the service coverage of the cluster overlaps with the service coverage of the neighboring cluster (operation 1120 -Yes), the management server 120 according to an embodiment may proceed to operation 1130. When the service coverage of the cluster and the service coverage of the neighboring cluster do not overlap (operation 1120 - No), the management server 120 according to an embodiment may proceed to operation 1140.

In operation 1130, the management server 120 according to an embodiment may wait for transmission of an update specification. When the service coverage of the cluster overlaps with the service coverage of the neighboring cluster, the management server 120 may determine this as a time point to defer updating the cluster. When the service coverage of the cluster overlaps with the service coverage of the neighboring cluster, the management server 120 may wait for transmission of the update specification until the update of the neighboring cluster is terminated.

When the service coverage of the cluster overlaps with the service coverage of the neighboring cluster, the management server 120 may sequentially perform the update of the cluster and the update of the neighboring cluster. When the service coverage of the cluster overlaps with the service coverage of the neighboring cluster, the management server 120 may control the update time point of the cluster such that the update of the cluster and the update of the neighboring cluster are not performed simultaneously. Accordingly, the management server 120 may control the update time point of the cluster to reduce network loss that occurs when the cluster is updated.

In operation 1140, the management server 120 according to an embodiment may transmit the update specification. When the service coverage of the cluster and the service coverage of the neighboring cluster do not overlap, the management server 120 may determine this as a time point when the cluster may be updated. When the service coverage of the cluster and the service coverage of the neighboring cluster do not overlap each other, the management server 120 may transmit an update specification including a command to update the cluster. The management server 120 may control the update time point of the corresponding cluster by identifying the service coverage of the cluster and the service coverage of the neighboring cluster in real time.

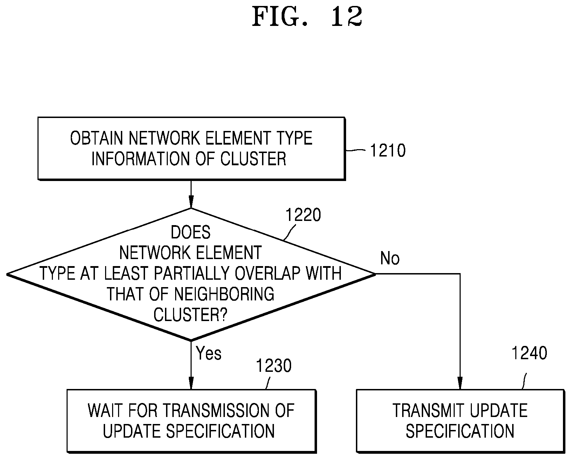

FIG. 12 is a diagram illustrating a management server controlling an update time point of at least one cluster according to a Network Element (NE) type, according to an embodiment of the present disclosure.

In operation 1210, the management server 120 according to an embodiment may obtain network element type information of the cluster. The network element type information of the cluster may include type information related to a cloud-native network function. For example, the network element type information may include a CNF type such as an Access Control Plane Function (ACPF), an Access User Plane Function (AUPF), an Access vDU Processing Function (ADPF), and a Unified Access Distribute unit Processing Function (UADPF). The management server 120 may designate a CNF type, update of which is to be performed.

In an embodiment, the management server 120 may identify and classify the type of the cluster in order to obtain the network element type information of the cluster. For example, the management server 120 may identify whether the type of the cluster is a Central Unit (CU) type or a Distributed Unit (DU) type. The management server 120 may classify a cluster of a central unit type and a cluster of a distributed unit type.

In an embodiment, the management server 120 may identify and classify a communication support coverage of the cluster in order to obtain the network element type information of the cluster. For example, the management server 120 may identify whether the communication support coverage of the cluster is SA (Stand Alone, 5G only) or NSA (Non Stand Alone, 5G+LTE). The management server 120 may classify a SA cluster and an NSA cluster.

In operation 1220, the management server 120 according to an embodiment may identify whether the network element type at least partially overlaps with that of a neighboring cluster. The management server 120 may identify the network element type of the cluster based on the obtained network element type information of the cluster. The management server 120 may identify whether the network element type of the cluster and the network element type of the neighboring cluster overlap each other. For example, the management server 120 may identify whether the type of the cluster and the type of the neighboring cluster are the same as a cluster of a central unit type or a cluster of a distributed unit type. For example, the management server 120 may identify whether the communication support coverage of the cluster and the communication support coverage of the neighboring cluster at least partially overlap.

The management server 120 may identify an association between the cluster of the central unit type and the cluster of the distributed unit type. The management server 120 may identify an association between the SA cluster and the NSA cluster. The management server 120 may perform updating based on the association between the clusters.

When the network element type at least partially overlaps with that of the neighboring cluster (operation 1220 - Yes), the management server 120 according to an embodiment may proceed to operation 1230. When the network element type does not overlap with the neighboring cluster (operation 1220 - No), the management server 120 according to an embodiment may proceed to operation 1240.

In operation 1230, the management server 120 according to an embodiment may wait for transmission of the update specification. When the network element type at least partially overlaps with that of the neighboring cluster, the management server 120 may determine this as a time point to defer updating the cluster. When the network element type at least partially overlaps with that of the neighboring cluster, the management server 120 may wait for transmission of the update specification until the update of the neighboring cluster is terminated.

When the network element type at least partially overlaps with that of the neighboring cluster, the management server 120 may sequentially perform the update of the cluster and the update of the neighboring cluster. When the network element type at least partially overlaps with that of the neighboring cluster, the management server 120 may control the update time point of the cluster such that the update of the cluster and the update of the neighboring cluster are not performed simultaneously. Accordingly, the management server 120 may control the update time point of the cluster to reduce network loss that occurs when the cluster is updated.

Before updating the SA cluster and the NSA cluster, the management server 120 may identify whether neighboring clusters which are currently being updated are the SA cluster or the NSA cluster. The management server 120 may determine the update progress time based on whether the neighboring clusters are the SA cluster or the NSA cluster. For example, when an adjacent NSA cluster is being updated, the management server 120 may wait for an update progress of another NSA cluster. Accordingly, the management server 120 may reduce LTE network loss that occurs during the update process.

In operation 1240, the management server 120 according to an embodiment may transmit an update specification. When the network element type does not overlap with that of the neighboring cluster, the management server 120 may determine this as a time point when the cluster may be updated. When the network element type does not overlap with that of the neighboring cluster, the management server 120 may transmit an update specification including a command to update the cluster. The management server 120 may identify the network element type in real time and control the update time point of the corresponding cluster.

When the update of the cluster of the central unit type is completed, the management server 120 may simultaneously update the cluster of the distributed unit type connected to the cluster of the central unit type, of which the update is completed. Accordingly, the management server 120 may reduce the time required to update a plurality of clusters.

The present disclosure provides a management server for controlling an update time point of at least one cluster based on resource information and a control method thereof.

The management server 120 according to an embodiment may include the monitoring module 210 and the scheduling module 220. According to an embodiment, the monitoring module 210 may receive resource information from the at least one cluster 130, 140, or 150. The scheduling module 220 according to an embodiment may receive an update request for the at least one cluster 130, 140, or 150. The scheduling module 220 according to an embodiment may determine the update time point of the at least one cluster 130, 140, or 150 based on the status information and the network performance information included in the resource information and the service coverage of the neighboring cluster. The scheduling module 220 according to an embodiment may transmit the update specification to update the network functions of the at least one cluster 130, 140, or 150 at the determined update time point.

The at least one cluster 130, 140, or 150 according to an embodiment may be configured with a Cloud-Native Network Function (CNF).

The scheduling module 220 according to an embodiment may receive an update rule related to the update request. The update rule according to an embodiment may include at least one of an update completion deadline of the at least one cluster 130, 140, or 150, a hardware parameter of the at least one cluster 130, 140, or 150, a software parameter of the at least one cluster 130, 140, or 150, and an update region of the at least one cluster 130, 140, or 150.

The management server 120 according to an embodiment may include the storage module 320 that stores status information and a service coverage.

When the first service coverage of the at least one cluster 130, 140, or 150 and the second service coverage of the neighboring cluster at least partially overlap, the scheduling module 220 according to an embodiment may set the first update period of the at least one cluster 130, 140, or 150 and the second update period of the neighboring cluster such that the update periods do not overlap.

The scheduling module 220 according to an embodiment may determine an update time point based on a Network Element (NE) type of the at least one cluster 130, 140, or 150.

The scheduling module 220 according to an embodiment may determine an update time point based on at least one of whether the neighboring cluster is updated and a version of the neighboring cluster.

The scheduling module 220 according to an embodiment may identify whether the number of User Equipment (UE) connected to the at least one cluster 130, 140, or 150 and the number of active calls of the at least one cluster 130, 140, or 150 are less than or equal to a threshold value. The scheduling module 220 according to an embodiment may determine the update time point based on an identification result.

The scheduling module 220 according to an embodiment may receive the update status transmitted from the at least one cluster 130, 140, or 150 in response to the update specification.

The scheduling module 220 according to an embodiment may provide an update result based on the update status.

The control method of a management server according to an embodiment may include receiving resource information from at least one cluster. The control method of a management server according to an embodiment may include receiving an update request for at least one cluster. The control method of a management server according to an embodiment may include determining an update time point of at least one cluster, based on status information and network performance information included in the resource information and on a service coverage of a neighboring cluster. The control method of a management server according to an embodiment may include transmitting an update specification to update the network function of the at least one cluster at the determined update time point.

The at least one cluster according to an embodiment may be configured with a Cloud-Native Network Function (CNF).

The control method of a management server according to an embodiment may include an operation of receiving an update rule related to an update request. The update rule according to an embodiment may include at least one of an update completion deadline of the at least one cluster, a hardware parameter of the at least one cluster, a software parameter of the at least one cluster, and an update region of the at least one cluster.

The control method of a management server according to an embodiment may include an operation of storing status information and a service coverage.

The control method of a management server according to an embodiment may include setting a first update period of at least one cluster and a second update period of a neighboring cluster such that the update periods do not overlap, when a first service coverage of the at least one cluster and a second service coverage of the neighboring cluster at least partially overlap each other.

The determining of the update time point according to an embodiment may include determining the update time point based on a Network Element (NE) type of the at least one cluster.

The determining of the update time point according to an embodiment may include determining the update time point based on at least one of whether to update a neighboring cluster and a version of the neighboring cluster.

The determining of the update time point according to an embodiment may include identifying whether the number of User Equipment (UE) connected to the at least one cluster and the number of active calls of the at least one cluster are less than or equal to a threshold value. The operation of determining the update time point according to an embodiment may include an operation of determining the update time point based on an identification result.

The control method of a management server according to an embodiment may include receiving an update status transmitted from at least one cluster in response to an update specification.

The control method of a management server according to an embodiment may include an operation of providing an update result based on an update status.

According to a management server and a control method thereof according to the present disclosure, an update time point of at least one cluster may be determined according to resource information to reduce network loss occurring during the update.

The method according to an embodiment of the present disclosure may be implemented in the form of program instructions that can be executed through various computer means and recorded in a computer-readable medium. The computer-readable medium may include program instructions, data files, data structures, and the like alone or in combination. The program instructions recorded on the medium may be specially designed and configured for the present disclosure or may be known and available to those skilled in the art of computer software. Examples of the computer-readable recording medium include magnetic media such as a hard disk, a floppy disk, and a magnetic tape, optical media such as a CD-ROM and a DVD, magneto-optical media such as a floptical disk, and hardware devices specially configured to store and execute program instructions, such as a ROM, a RAM, and a flash memory. Examples of the program instructions include not only machine language codes such as those generated by a compiler, but also high-level language codes that can be executed by a computer using an interpreter or the like.

Some embodiments of the present disclosure may also be implemented in the form of a recording medium including instructions executable by a computer, such as a program module executed by a computer. Computer-readable media may be any available media that can be accessed by a computer and includes both volatile and nonvolatile media, removable and non-removable media. Also, the computer-readable medium may include both a computer storage medium and a communication medium. The computer storage medium includes both volatile and nonvolatile media, removable and non-removable media implemented in any method or technology for storage of information such as computer-readable instructions, data structures, program modules, or other data. Communication media typically include computer readable instructions, data structures, program modules, or other data of modulated data signals such as carrier waves, or other transmission mechanisms, and include any information delivery media. In addition, some embodiments of the disclosure may be implemented as a computer program or a computer program product including instructions executable by a computer, such as a computer program executed by a computer.

A machine-readable storage medium may be provided in the form of a non-transitory storage medium. Here, 'non-transitory storage medium' only means that it is a tangible device and does not include signals (e.g. electromagnetic waves). This term does not distinguish between cases where data is semi-permanently stored in a storage medium and cases where data is temporarily stored. For example, the "non-transitory storage medium" may include a buffer in which data is temporarily stored.

According to an embodiment, a method according to various embodiments disclosed herein may be included and provided in a computer program product. Computer program products are commodities and may be traded between sellers and buyers. A computer program product may be distributed in the form of a machine-readable storage medium (e.g. compact disc read only memory (CD-ROM)) or distributed online (e.g., downloaded or uploaded) through an application store or directly between two user devices (e.g. smartphones). In the case of online distribution, at least a portion of the computer program product (e.g., downloadable app) may be at least temporarily stored or temporarily generated in a machine-readable storage medium, such as a memory of a manufacturer's server, an application store's server, or a relay server.

## Claims

1. A management server 120 comprising:
a monitoring module 210; and
a scheduling module 220,
wherein the monitoring module 210 receives resource information from at least one cluster 130, 140, or 150, and
wherein the scheduling module 220
receives an update request for the at least one cluster 130, 140, or 150,
determines an update time point of the at least one cluster 130, 140, or 150, based on status information and network performance information included in the resource information and on a service coverage of a neighboring cluster, and
transmits an update specification so as to update network functions of the at least one cluster 130, 140, or 150 at the determined update time point.

2. The management server 120 of claim 1, wherein
the at least one cluster 130, 140, or 150 is configured with a Cloud-Native Network Function (CNF).

3. The management server 120 of one of claims 1 and 2, wherein
the scheduling module 220 receives an update rule related to the update request, and
wherein the update rule comprises
at least one of an update completion deadline of the at least one cluster 130, 140, or 150, a hardware parameter of the at least one cluster 130, 140, or 150, a software parameter of the at least one cluster 130, 140, or 150, and an update region of the at least one cluster 130, 140, or 150.

4. The management server 120 of at least one of claims 1 to 3,
further comprising a storage module 320 storing the status information and the service coverage.

5. The management server 120 of at least one of claims 1 to 4, wherein
the scheduling module 220 sets, when a first service coverage of the at least one cluster 130, 140, or 150 and a second service coverage of the neighboring cluster at least partially overlap, a first update period of the at least one cluster 130, 140, or 150 and a second update period of the neighboring cluster such that the first and second update periods do not overlap.

6. The management server 120 of at least one of claims 1 to 5, wherein
the scheduling module 220 determines the update time point, based on a Network Element (NE) type of the at least one cluster 130, 140, or 150.

7. The management server 120 of at least one of claims 1 to 6, wherein
the scheduling module 220 determines the update time point, based on at least one of whether the neighboring cluster is updated and a version of the neighboring cluster.

8. The management server 120 of at least one of claims 1 to 7, wherein
the scheduling module 220 identifies whether the number of User Equipment (UE) connected to the at least one cluster 130, 140, or 150 and the number of active calls of the at least one cluster 130, 140, or 150 are less than or equal to a threshold value, and
determines the update time point, based on a result of the identifying.

9. The management server 120 of at least one of claims 1 to 8, wherein
the scheduling module 220 receives an update status transmitted from the at least one cluster 130, 140, or 150 in response to the update specification.

10. The management server 120 of claim 9, wherein
the scheduling module 220 provides an update result, based on the update status.

11. A control method of a management server, the control method comprising:
receiving resource information from at least one cluster;
receiving an update request for the at least one cluster;
determining an update time point of the at least one cluster, based on status information and network performance information included in the resource information and on a service coverage of a neighboring cluster; and
transmitting an update specification so as to update network functions of the at least one cluster at the determined update time point.

12. The control method of claim 11, wherein
the at least one cluster is configured with a Cloud-Native Network Function (CNF).

13. The control method of one of claims 11 and 12, further comprising
receiving an update rule related to the update request,
wherein the update rule comprises
at least one of an update completion deadline of the at least one cluster, a hardware parameter of the at least one cluster, a software parameter of the at least one cluster, and an update region of the at least one cluster.

14. The control method of at least one of claims 11 to 13, further comprising
storing the status information and the service coverage.

15. The control method of at least one of claims 11 to 14, further comprising,
setting, when a first service coverage of the at least one cluster and a second service coverage of the neighboring cluster at least partially overlap, a first update period of the at least one cluster and a second update period of the neighboring cluster such that the first and second update periods do not overlap.
